# EUROPEAN PATENT SPECIFICATION

(11) **EP 1 171 212 B1**
(45) Date of publication and mention of the grant of the patent: **29.12.2004**
(21) Application number: 00920914.9
(22) Date of filing: 20.04.2000
(51) Int. Cl.: B01D 11/02, C11B 9/02, A61K 35/78, A01N 63/00

(54) **SOLVENT EXTRACTION PROCESS**
LÖSUNGSMITTELEXTRAKTIONSVERFAHREN
PROCEDE D'EXTRACTION PAR SOLVANTS

(30) Priority: 22.04.1999 GB 9909136
(43) Date of publication of application: 16.01.2002
(73) Proprietor: Ineos Fluor Holdings Limited, Southampton, Hampshire SO14 3BP (GB)
(72) Inventor: HILL, Claire Elizabeth, Sankey, Warrington WA54 1UY (GB); DOWDLE, Paul Alan, Haydock, St. Helens WA11 0JT (GB); CORR, Stuart, Warrington, Cheshire WA4 5DH (GB)
(74) Representative: Dee, Ian Mark
(86) International application number: PCT/GB2000/001554
(87) International publication number: WO 2000/064555

(56) References cited:
- EP-A- 0 616 821
- WO-A-95/26794
- US-A- 5 562 857

## Description

The present invention relates to a solvent extraction process in which a raw material of plant origin containing a particular flavour or fragrance is treated with an extraction solvent so as to remove at least a proportion of that flavour or fragrance from the raw material.

Processes for extracting a desired compound or composition from a raw or bulk material which contains that compound or composition as a constituent part using an extraction solvent are known in the art. In these known processes, the raw material is contacted with the extraction solvent, often under vigorous mixing conditions so as to facilitate the dissolution of the desired compound or composition into the extraction solvent, and the resulting solvent liquor containing the desired compound or composition is then separated from the raw material for subsequent processing, e.g. distillation to remove the extraction solvent. Multiple extractions may suitably be carried out on the same raw material sample so as to maximise the amount of the desired compound or composition which is extracted from that sample. Typical examples of extraction solvents which have been used in the prior art extraction processes include hexane, methyl acetate, ethyl acetate, acetone and methanol.

Although solvent extraction processes are used on a commercial scale, the extraction solvents which are currently used in these processes are not wholly satisfactory. Thus, when solvents such as hexane are used to extract flavoured or aromatic oils, such as are used in the food and cosmetic industries, from plant matter containing those oils, unwanted materials contained in the plant, e.g. high molecular weight waxes, tend to be eluted along with the desired oil. This problem necessitates subjecting the resultant hexane liquor to further processing in which the unwanted waxes are removed by extraction, e.g. using ethanol. Furthermore, the extraction solvents which are currently in use have fairly high boiling points, and the elevated temperatures which are employed in the distillation process to remove these high boiling solvents from the extracted material can cause problems. For example, the flavoured or aromatic oils contained in certain plants are complex substances containing a large number of individual compounds some of which are relatively volatile or relatively thermally unstable. Consequently, high distillation temperatures can tend to result in a loss of product either through coevaporation of the more volatile compounds with the extraction solvent or thermal degradation of the more thermally unstable compounds.

The use of hydrofluorocarbons such as 1,1,1,2-tetrafluoroethane (R-134a) for extracting products such as flavours and fragrances from materials of natural origin is also known from EP-A-616821. The process comprises the steps of (a) contacting the material with a non-chlorinated fluorinated hydrocarbon solvent in the liquid phase so as to charge the solvent with the component, (b) collecting the charged solvent and (c) removing the solvent to isolate the component.

WO-A-95/26794 describes a process for extracting a compound or composition of matter from a raw material containing that compound or composition as a constituent part. The process comprises the steps of (1) contacting a sample of the raw material with an extraction solvent comprising a C₁₋₄ (hydro)fluorocarbon and a co-solvent, and (2) separating the solvent liquor thus obtained containing the extract from the raw material.

The present invention provides a new solvent extraction process which can be used to extract a wide variety of flavours or fragrances from raw or bulk materials of plant origin of which they form a constituent part. In one particular embodiment, the present invention provides a solvent extraction process which is capable of extracting the flavoured or aromatic oils contained in certain plant materials.

According to the present invention there is provided a process for extracting a flavour or fragrance from a raw material of plant origin containing that flavour or fragrance as a constituent part, which process comprises the steps of (1) contacting the raw material with an extraction solvent in liquid form comprising 1,1,1,3,3-pentafluoropropane (R-245fa), so as to extract the flavour or fragrance from the raw material into the solvent and (2) separating the solvent containing the extracted flavour or fragrance from the raw material.

It will be appreciated that the process of the resent invention will not necessarily extract all of the desired flavour or fragrance that is contained in the raw material.

In one particular embodiment, the extraction process of the present invention can be used to extract a flavoured or aromatic oil, from a plant material containing that oil.

Accordingly, the present invention provides a process for extracting a flavoured or aromatic oil from a plant material containing that oil as a constituent part, which process comprises the steps of (1) contacting the plant material with an extraction solvent comprising R-245fa so as to extract the flavoured or aramatic oil from the plant material into the solvent, and (2) separating the solvent containing the extracted flavoured or aromatic oil from the plant material.

When used in this specification, the expression "plant material" not only includes materials which are essentially unprocessed and as such are clearly recognisable as being of plant origin, for example bark, leaves, flowers and seeds, but also materials, which although originating from plants, have been subjected to various processes and as such have a form which is somewhat different than the plants from which they originated, for example ground cumin and ground ginger.

The process of the present invention is particularly suitable for extracting flavoured/aromatic oils from star anise, coriander and cloves.

The extraction solvent which is used in the process of the present invention may also comprise a co-solvent in addition to the pentafluoropropane.

Suitable co-solvents include the fluorinated hydrocarbons, by which we mean compounds containing only carbon, hydrogen and fluorine atoms, such as the hydrofluoromethanes, the hydrofluoroethanes and the hydrofluoropropanes other than pentafluoropropanes. Examples of hydrofluoromethanes, hydrofluoroethanes and hydrofluoropropanes which may be used as co-solvents include, inter alia, trifluoromethane (R-23), fluoromethane (R-41), difluoromethane (R-32), pentafluoroethane (R-125), 1,1,1-trifluoroethane (R-143a), 1,1,2,2-tetrafluoroethane (R-134), 1,1,1,2-tetrafluoroethane (R-134a), 1,1-difluoroethane (R-152a), 1,1,1,2,3,3-hexafluoropropane (R-236ea), 1,1,1,2,2,3-hexafluoropropane (R-236cb) and 1,1,1,3,3,3-hexafluoropropane (R-236fa).

Preferably, if a co-solvent is used in combination with the pentafluoropropane, it will be a fluorine free material and more particularly a halogen free material. Suitable halogen free co-solvents will typically have a boiling point of 60°C or below, for example in the range of from -85 to 60°C. The preferred co-solvents have a boiling point of 20°C or below, for example in the range of from -85 to 20°C, preferably 10°C or below, for example in the range of from -70 to 10°C, and more preferably 0°C or below, for example in the range of from -60 to 0°C. Mixtures of two or more co-solvents may be used if desired.

Preferred solvents may be selected from the C₂₋₆, particularly the C₂₋₄ hydrocarbon compounds by which we mean compounds containing only carbon and hydrogen atoms. Suitable hydrocarbons may be aliphatic or alicyclic. Preferred hydrocarbons are the alkanes and cycloalkanes, with alkanes such as ethane, n-propane, i-propane, n-butane and i-butane being especially preferred.

Other preferred co-solvents include the hydrocarbon ethers, by which we mean compounds having the formula R¹-O-R² in which R¹ and R² are independently hydrocarbyl groups containing only carbon and hydrogen atoms, such as C₁₋₆ and preferably C₁₋₃ alkyl groups. Preferred dialkyl ethers include dimethyl ether, methyl ethyl ether and diethyl ether.

Dimethyl ether and butane are particularly preferred co-solvents and of these dimethyl ether is especially preferred.

The extraction solvent typically comprises from 50.0 to 100 % by weight, e.g. from 50.0 to 99.5 % by weight, of a pentafluoropropane and from 0 to 50 % by weight, e.g. from 0.5 to 50 % by weight, of a co-solvent.

Preferred extraction solvents comprise from 70.0 to 100.0 % by weight, e.g. from 70.0 to 99.0 % by weight, of the pentafluoropropane and from 0 to 30 % by weight, e.g. from 1 to 30 % by weight, of the co-solvent. Particularly preferred extraction solvents comprise from 80.0 to 100.0 % by weight, e.g. from 80.0 to 98.0 % by weight, of the pentafluoropropane and from 0 to 20.0 % by weight, e.g. from 2.0 to 20.0 % by weight, of the co-solvent.

If the co-solvent is a flammable material, which will be the case with the hydrocarbon and hydrocarbon ethers identified above, then the extraction solvent will preferably comprise sufficient of the pentafluoropropane to render it non-flammable overall. Where the extraction solvent is a blend of one or more compounds, the resulting blend may be zeotropic, azeotropic or azeotrope-like.

The extraction solvent which is used in the process of the present invention is in liquid form. Where the extraction solvent has a boiling point below room temperature, maintaining the solvent in liquid form will involve the application of cooling and/or super-atmospheric pressures.

The preferred extraction solvents comprise only low boiling materials so that removal of the solvent from the solvent liquor containing the extract tends to be relatively facile allowing the distillation to be carried out at relatively low temperatures, e.g. room temperature and below. This, in turn, reduces the risk of loosing desired product either through coevaporation of the more volatile compounds with the extraction solvent or thermal degradation of the more thermally unstable compounds.

The raw material which is subjected to the present extraction process may be a liquid, e.g. a solution, suspension or emulsion, or a solid. If the raw material is a solid, then the efficiency of the extraction process may be significantly improved by reducing the solid to a finely divided form, such as a powder.

The extraction process of the present invention may be conducted at the supercritical temperature of the extraction solvent, in which case elevated temperatures will need to be employed. Preferably, however, the extraction process is conducted at a temperature in the range of from -60 to 150°C, more preferably in the range of from -40 to 60°C and particularly in the range of from -30 to 40°C.

The extraction process of the present invention may be conducted at atmospheric or super-atmospheric pressures. The precise operating pressure will depend, inter alia, on the extraction solvent which is used, particularly its boiling point, and whether the extraction process is to be conducted with that solvent in liquid or gaseous form. Preferred operating pressures are in the range of from 0.1 to 200 bar, more preferably in the range of from 0.5 to 30 bar and particularly in the range of from 1 to 15 bar.

The contacting of the extraction solvent with the raw material to be processed may be carried out under vigorous mixing conditions so as to facilitate the dissolution of the material to be extracted into the extraction solvent. The vigorous mixing may be achieved by mechanically shaking the extraction vessel containing the raw material/extraction solvent mixture or by stirring that mixture.

After the extraction process of the present invention has been completed, the solvent liquor containing the extract can be distilled to remove the extraction solvent from the extract. The resulting extract may then be used as it is or, alternatively, it may be subjected to one or more further processes, for example to purify the extract or to isolate a given compound or compounds contained in the extract.

The extraction process of the present invention may be operated continuously with the same extraction solvent being used repeatedly. A suitable installation for carrying out a continuous extraction process typically comprises an extraction vessel, a distillation unit, a compressor, a condenser and a suitable arrangement of connecting pipe work. The extraction solvent is first charged to the extraction vessel where it is contacted with the raw material to be processed, possibly under vigorous mixing conditions so as to facilitate the dissolution of the compound or composition to be extracted into the extraction solvent. The resulting solvent liquor containing the extract is then separated from the raw material, e.g. by allowing the liquor to drain through a filter arranged at the bottom of the extraction vessel, and passed to the distillation unit where the extraction solvent is removed by evaporation to leave the extract. The vapour generated in the distillation unit is compressed, e.g. using a diaphragm compressor, and is then delivered to a condenser which returns the extraction solvent to liquid form for recharging to the extraction vessel. With a continuous extraction process of this kind, it is possible to maximise the amount of the extract obtained without subjecting the same raw material sample to a succession of individual extractions. Once the raw material sample is exhausted, it is then removed from the extraction vessel and replaced with a fresh raw material sample.

The present invention is now illustrated but not limited by the following examples.

### General Procedure 1:

The natural product to be extracted is crushed and a weighed amount of the crushed product is placed in a cylinder. A fitting having an entry pipe for charging a solvent to the cylinder and an on/off valve for opening and closing this pipe to the passage of fluid is then attached to the open end of the cylinder.

A weighed amount of the extraction solvent is then filled into the cylinder via the entry pipe. After the required amount of extraction solvent has been charged, the on-off valve is closed, the cylinder is shaken to mix the contents and then allowed to stand to allow the crushed natural product to become soaked with the extraction solvent.

The cylinder is then placed in a fridge together with a Goertz tube of known weight and once the cylinder and tube have cooled, the cylinder is inverted, the on/off valve opened and the extraction solvent containing the extract poured from the cylinder into the Goertz tube via the entry pipe.

The Goertz tube is then capped with stoppers which provide for the escape of the evaporating solvent while preventing moisture from entering the tube and the solvent allowed to steadily evaporate while gently warming the tube. Finally, nitrogen gas is flushed through the tube in order to assist the evaporation of the final traces of solvent and leave the extract behind.

The Goertz tube is then weighed and the amount of extract in the tube determined. A sample of this extract is then dissolved in ethanol and subjected to analysis by Gas Chromatography (GC)/Mass Spectrometry (MS) using the following method and conditions.

Columns: CPsil5 and CPsil19 capillary columns (each 320 µm x 25 m) connected in series. The combination of columns gives good peak separation. Both columns are available from Chrompack Ltd.

### Method: The temperature of the oven was controlled as follows:

| | |
|---|---|
| Initial Temperature | 150°C |
| Initial Time | 2 minutes |
| Rate | 3°C/minute |
| Final Temperature | 225°C |
| Final Time | 30 minutes |

### General Procedure 2:

The natural product is prepared and weighed into a cellulose thimble. The cellulose thimble containing the natural product is then placed in a soxhlet extractor and a pre-weighed receiver flask is attached in position on the extractor. The glassware is lowered into an autoclave, fitted with a suitable condenser and heating coil, which is then sealed and evacuated.

The required amount of solvent is then transferred into the evacuated autoclave via a ball valve which is then resealed. The transfer of solvent into the autoclave raises the pressure in the autoclave and the solvent condenses into the glassware. The condenser and heating coil temperatures are then set at about 0°C and 40°C respectively and the extraction allowed to proceed for the required time period.

On completion of the extraction, the solvent is reclaimed by opening the ball valve and condensing the solvent into a cooled Whitey Bomb. The autoclave is then opened and the glassware retrieved. The receiver flask is detached and re-weighed to determine the yield. A sample of the extract is then analysed by GC/MS using the following column and oven conditions:
Column type: DB 5, 30m x 0.32mm
Temperature: 200°C, isothermal

### Examples 1 and 2

In these examples, General Procedure 1 described above was used to extract and collect the oil contained in samples of ground cloves and star anise. The extraction solvent used was R-245fa.

In Example 1, about 5 g of ground cloves and about 91 g of the R-245fa extraction solvent were used.

About 0.8 g of pale yellow clove oil was extracted from the ground cloves to give a yield of 16 % oil based on the weight of biomass which was subjected to the extraction.

The oil was analysed by GC/MS in accordance with General Procedure 1. The composition of the oil based on the area % of the GC/MS trace was found to be:
Eugenol 58.8 %
Caryophyllene 10.8 %
Eugenyl acetate 30.4 %

The other components amounted in total to less than 0.5 % of the total peak area.

In Example 2, about 5 g of ground star anise and about 41 g of the R-245fa extraction solvent were used.

About 0.23 g of star anise oil was extracted from the ground star anise to give a yield of 4.6 % oil based on the weight of biomass which was subjected to the extraction.

The oil was analysed by GC/MS in accordance with General Procedure 1. The composition of the oil based on the area % of the GC/MS trace was found to be:
trans-annethole 87.2 %
p-anisaldehyde 9.1 %
Limonene 2.4 %
Anisketone 1.3 %

The other components amounted in total to less than 1.0 % of the total peak area.

### Example 3

In this example, the General Procedure 2 described above was used to extract ginger. The ginger was ground to a particle size of approximately 1 to 3 mm and then extracted in accordance with General Procedure 2 using R-245fa as the extraction solvent.

The amounts of ginger and solvent used in the extraction are given in Table 1 together with the yield of the extract. The final extract was a yellow/orange translucent liquid.

The liquid was analysed by GC/MS in accordance with General Procedure 2. The composition of the liquid based on the area % of the GC/MS trace was found to be:

| | |
|---|---|
| Camphene | 1.82 % |
| Sabiene | 3.36 % |
| Cedrene | 9.22 % |
| Famesene | 17.69 % |
| Zingibrene | 58.81 % |
| Bisabolene | 6.74 % |

The other components amounted in total to less than 1.0 % of the total peak area.

### Example 4

In this example, the General Procedure 2 described above was used to extract vanilla. The vanilla was chopped into approximately 3 mm pieces and then extracted in accordance with General Procedure 2 using R-245fa as the extraction solvent.

The amounts of vanilla and solvent used in the extraction are given in Table 1 together with the yield of the extract. The final extract was a yellow solid.

The solid was dissolved in ethanol and analysed by GC/MS in accordance with General Procedure 2. The vanilla extract was found to be mainly composed of vanillin by GC/MS.

### Example 5

In this example, the General Procedure 2 described above was used to extract jasmine. Jasmine concrete was melted and loaded onto a vermiculite support and then extracted in accordance with General Procedure 2 using R-245fa as the solvent.

The amounts of jasmine and solvent used in the extraction are given in Table 1 together with the yield of the extract. The final extract was a golden orange oil.

The oil was analysed by GC/MS in accordance with General Procedure 2. The composition of the oil based on the area % of the GC/MS trace was found to be:

| | |
|---|---|
| Linalool | 26.03 % |
| Benzyl Acetate | 51.18 % |
| Indole | 3.24 % |
| Eugenol | 9.99 % |
| Jasmone | 5.34 % |
| Famesene | 2.03 % |
| Benzoic Acid | 2.19 % |

The other components amounted in total to less than 1.0 % of the total peak area.

**Table 1**

| Biomass Type | Biomass Weight (g) | Amount of Solvent used (g) | Yield of Product (g) | Yield of product (% w/w) |
|---|---|---|---|---|
| Ginger | 40.4 | 339 | 2.0 | 5.0 |
| Vanilla | 59.5 | 377 | 2.4 | 4.0 |
| Jasmine | 34.0 | 354 | 6.9 | 20.2 |

## Claims

1. A process for extracting a flavour or a fragrance from a raw material of plant origin containing that flavour or fragrance as a constituent part, which process comprises the steps of (1) contacting the raw material with an extraction solvent in liquid form comprising 1,1,1,3,3-pentafluoropropane (R-245fa) so as to extract the flavour or fragrance from the raw material into the solvent, and (2) separating the solvent containing the extracted flavour or fragrance from the raw material.

2. A process as claimed in claim 1, wherein the flavour or fragrance is comprised in an oil.

3. A process as claimed in any one of the preceding claims, wherein the extraction solvent comprises a co-solvent in addition to the pentafluoropropane.

4. A process as claimed in claim 3, wherein the co-solvent comprises at least one C₂₋₆ hydrocarbon.

5. A process as claimed in claim 4, wherein the C₂₋₆ hydrocarbon is selected from the alkanes and cycloalkanes.

6. A process as claimed in claim 5, wherein the co-solvent comprises at least one compound selected from ethane, n-propane, i-propane, n-butane and i-butane.

7. A process as claimed in claim 6, wherein the co-solvent comprises n-butane.

8. A process as claimed in claim 3, wherein the co-solvent comprises at least one hydrocarbon ether having the formula R¹-O-R² in which R¹ and R² are independently C₁₋₆ alkyl groups.

9. A process as claimed in claim 8, wherein the co-solvent comprises at least one ether selected from dimethyl ether, methyl ethyl ether and diethyl ether.

10. A process as claimed in claim 9, wherein the co-solvent comprises dimethyl ether.

11. A process as claimed in any one of the preceding claims which is conducted at a temperature in the range of from -60 to 150°C.

## Patentansprüche

1. Verfahren zur Extraktion eines Aromas oder eines Duftstoffs aus einem Rohmaterial pflanzlichen Ursprungs, das das Aroma oder den Duftstoff als Bestandteil enthält, wobei das Verfahren die Schritte umfaßt (1) Inkontaktbringen des Rohmaterials mit einem Extraktionslösemittel in flüssiger Form, das 1,1,1,3,3,-Pentafluorpropan (R-245fa) umfaßt, um aus dem Rohmaterial das Aroma oder den Duftstoff in das Lösemittel zu extrahieren, und (2) Abtrennen des Lösemittels, das das extrahierte Aroma oder den extrahierten Duftstoff enthält, aus dem Rohmaterial.

2. Verfahren nach Anspruch 1, wobei das Aroma oder der Duftstoff in einem Öl enthalten ist.

3. Verfahren nach irgendeinem der vorausgehenden Ansprüche, wobei das Extraktionslösemittel zusätzlich zu dem Pentafluorpropan ein Co-Lösemittel umfaßt.

4. Verfahren nach Anspruch 3, wobei das Co-Lösemittel wenigstens einen C₂₋₆-Kohlenwasserstoff umfaßt.

5. Verfahren nach Anspruch 4, wobei der C₂₋₆-Kohlenwasserstoff aus den Alkanen und Cycloalkanen ausgewählt ist.

6. Verfahren nach Anspruch 5, wobei das Co-Lösemittel wenigstens eine Verbindung umfaßt, die ausgewählt ist aus Ethan, n-Propan, i-Propan, n-Butan und i-Butan.

7. Verfahren nach Anspruch 6, wobei das Co-Lösemittel n-Butan umfaßt.

8. Verfahren nach Anspruch 3, wobei das Co-Lösemittel wenigstens einen Kohlenwasserstoffether der Formel R¹-O-R² umfaßt, worin R¹ und R² unabhängig voneinander C₁₋₆-Alkylgruppen sind.

9. Verfahren nach Anspruch 8, wobei das Co-Lösemittel wenigstens einen Ether umfaßt, der ausgewählt ist aus Dimethylether, Methylethylether und Diethylether.

10. Verfahren nach Anspruch 9, wobei das Co-Lösemittel Dimethylether umfaßt.

11. Verfahren nach irgendeinem der vorausgehenden Ansprüche, das bei einer Temperatur im Bereich von -60 bis 150°C durchgeführt wird.

## Revendications

1. Procédé d'extraction d'un arôme ou d'un parfum à partir d'une matière première d'origine végétale contenant cet arôme ou ce parfum en tant que partie constituante, lequel procédé comprend les étapes consistant à (1) mettre en contact la matière première avec un solvant d'extraction sous forme liquide comprenant du 1,1,1,3,3-pentafluoropropane (R-245fa) de manière à extraire l'arôme ou le parfum à partir de la matière première dans le solvant et (2) séparer le solvant contenant l'arôme ou le parfum extrait à partir de la matière première.

2. Procédé selon la revendication 1, dans lequel l'arôme ou le parfum est compris dans une huile.

3. Procédé selon l'une quelconque des revendications précédentes, dans lequel le solvant d'extraction comprend un co-solvant en plus du pentafluoropropane.

4. Procédé selon la revendication 3, dans lequel le co-solvant comprend au moins un hydrocarbure en C₂ à C₆.

5. Procédé selon la revendication 4, dans lequel l'hydrocarbure en C₂ à C₆ est choisi parmi les alcanes et les cycloalcanes.

6. Procédé selon la revendication 5, dans lequel le co-solvant comprend au moins un composé choisi parmi l'éthane, le n-propane, l'i-propane, le n-butane et l'i-butane.

7. Procédé selon la revendication 6, dans lequel le co-solvant comprend du n-butane.

8. Procédé selon la revendication 3, dans lequel le co-solvant comprend au moins un éther d'hydrocarbure ayant la formule R¹-O-R² dans laquelle R¹ et R² représentent indépendamment des groupes alkyle en C₁ à C₆.

9. Procédé selon la revendication 8, dans lequel le co-solvant comprend au moins un éther choisi parmi l'éther diméthylique, l'éther de méthyle et d'éthyle et l'éther diéthylique.

10. Procédé selon la revendication 9, dans lequel le co-solvant comprend de l'éther diméthylique.

11. Procédé selon l'une quelconque des revendications précédentes qui est conduit à une température située dans la plage de -60 à 150°C.
